(19) **Europäisches Patentamt**

**European Patent Office**

**Office européen des brevets**

(11) **EP 0 855 932 B1**

(12) **EUROPEAN PATENT SPECIFICATION**

(45) Date of publication and mention
of the grant of the patent:
**02.07.2003 Bulletin 2003/27**

(51) Int Cl.7: **B01D 61/36**, B01D 71/02

(21) Application number: **96932081.1**

(86) International application number:
**PCT/NL96/00357**

(22) Date of filing: **12.09.1996**

(87) International publication number:
**WO 97/010045 (20.03.1997 Gazette 1997/13)**

(54) **TUBULAR MEMBRANE, METHOD FOR MANUFACTURING SAME, AND MEMBRANE SEPARATION PROCESS**

ROHRFÖRMIGE MEMBRAN, VERFAHREN ZU DEREN HERSTELLUNG UND MEMBRANTRENNVERFAHREN

MEMBRANE TUBULAIRE, SON PROCEDE DE FABRICATION ET PROCEDE DE SEPARATION RECOURANT A LADITE MEMBRANE

(84) Designated Contracting States:
**AT BE CH DE DK ES FI FR GB GR IE IT LI LU MC NL PT SE**
Designated Extension States:
**AL LT LV SI**

(30) Priority: **12.09.1995  NL 1001181**

(43) Date of publication of application:
**05.08.1998   Bulletin 1998/32**

(73) Proprietor: **Pervatech B.V.**
**7468 MC Enter (NL)**

(72) Inventors:
 • **CUPERUS, Folkert, P.-Inst. Agrotech. Onderzoek**
 **NL-6708 PD Wageningen (NL)**
 • **VAN LANGERAK, B. S. - Inst. Agrotech. Onderzoek**
 **NL-6708 Wageningen (NL)**
 • **DERKSEN, J. T. P. - Instituut Agrotech. Onderzoek**
 **NL - 6708 Wageningen (NL)**

 • **VAN GEMERT, Robert, W. - Inst. Agrotec. Onderzoek**
 **NL-6708 Wageningen (NL)**

(74) Representative:
 **Smulders, Theodorus A.H.J., Ir. et al**
 **Vereenigde**
 **Postbus 87930**
 **2508 DH Den Haag (NL)**

(56) References cited:
 EP-A- 0 254 359          EP-A- 0 320 033
 EP-A- 0 422 122          EP-A- 0 471 910
 EP-A- 0 586 745          EP-A- 0 676 383
 US-A- 3 129 145

 • DATABASE WPI Section Ch, Week 9149 Derwent Publications Ltd., London, GB; Class J01, AN 91-359231 XP002002817 & JP,A,03 242 231 (MITSUBISHI HEAVY IND KK) , 29 October 1991

Remarks:
The file contains technical information submitted after the application was filed and not included in this specification

EP 0 855 932 B1

**Description**

The invention relates to a particular use of a tubular membrane, to a method for manufacturing a particular membrane, and to a separation process wherein such membrane is used. More in particular, the invention is in the field of selective membranes and their use in the separation of components from a liquid mixture on the basis of pervaporation and pressure traction.

In the case of pervaporation, a liquid mixture to be separated is in contact with a separating top layer of a membrane. On the other side of the membrane, a reduced pressure is created. Because of this applied difference in pressure and the difference in thermodynamic activity related thereto, permeation of one or more components from the liquid mixture takes place. On the permeate side, these components are recondensed through cooling and/or increased pressure. The effectiveness of pervaporation can be increased by applying liquid phases of higher temperatures and/or higher pressures on the feed side, and/or by applying lower pressures or by cooling deeper on the permeate side.

Pressure traction differs from pervaporation in that for pressure traction no mechanical pressure difference is applied over the separation membrane, but a difference in concentration or activity is created by flowing past a gas, such as nitrogen, or a liquid, such as glycerol, on the permeate side.

Pervaporation and pressure traction are techniques that are used for removing substances from liquid mixtures. These techniques are in particular suitable for removing impurities or relatively small amounts of a specific component or specific components from a liquid mixture and for separating azeotropic mixtures. These known separation techniques are typically carried out utilizing a membrane on the basis of (organic) polymers. Such processes are described in, inter alia, Mulder, 'Basic principles of membrane technology', Kluwer Dordrecht (1991), and the ScD dissertation of H. Nijhuis, titled "Removal of trace organics from water by pervaporation', University of Twente (1991).

Unlike distillation methods, pervaporation and pressure traction can be used for the direct separation of the most volatile or the least volatile component from liquid mixtures. This can be set through a suitable choice of the membrane material.

In the field to which the present invention relates, it has thus far been assumed that these separation techniques are based on differences in the membrane permeability and the vapor pressure of the components to be separated, see for instance Boddeker and Bengtson, 'Pervaporation membrane separation processes', Elsevier Amsterdam (1989), in particular Chapter 12. The membrane permeability is a function of the solubility of the permeant and the diffusion coefficient in the membrane polymer under non-isotropic swelling conditions. In fact, the membrane permeability depends on the interactions of the components of a liquid mixture to be separated with the membrane material.

This general assumption is based on the fact that in the known pervaporation/pressure traction membrane - and also in gas separation membranes, for that matter - a rising temperature involves an increase of the flux through the membrane, but a decrease of the selectivity.

From a scientific point of view, this points to the importance of the swelling of the membrane.

Membranes on the basis of - usually organic - polymers have a number of drawbacks. For instance, such membranes exhibit a great variation in performance when they are alternately used for different mixtures of liquids. Moreover, the stability of organic polymer-based membranes decreases substantially over time. In fact, this effect strongly depends on the solvent that is contacted.with the membrane.

Apart from the problems in chemical stability, the known polymeric membranes are also sensitive to effects of temperature and pressure, while, further, concentration differences of the components to be separated in the liquid mixture flowing past can have a great influence on the separation performance.

In the prior art literature it has been suggested that membranes on the basis of zeolites can be used for liquid separations on the basis of pervaporation and pressure traction. However, the manufacture of zeolite membranes is highly complicated, inter alia because of the requirement that the membrane surface between the molecular sieve crystals must be completely liquid-tight and the molecular sieve crystals must often be oriented in a particular direction, depending on the pore structure.

EP-A-0 320 033 relates to a composite ceramic micropermeable membrane suitable for separation and filtration, and particularly for micro-, ultra- or hyperfiltration. Said membrane comprises a support and a microporous layer, which microporous layer is applied to said support from a suspension of inorganic material. Before applying said suspension the affinity between support and suspension is altered by altering the hydrophilicity and particularly by making the support more hydrophobic. In a preferred embodiment this is achieved by treating the support with a silane composition.

In EP-A-0 471 910 a ceramic filter is described which is made from an aggregate comprising coarse alumina particles and a sintering aid of mixed alumina and zirconium particles.

Further, GB-A-2,277,885 suggests to make membranes at the inside of a tube on the basis of silicon nitride materials mixed with oxides. Said method of making is however not enablingly described. Silicon nitride materials could - at the moment of the filing of said GB-A - only be made on a practical scale by gas phase or gas plasma processes. These techniques result in coarse particles and cannot provide a layer of uniform thickness on the inside of a tube.

In accordance with the invention, it has now been found that when a relatively dense ceramic oxide layer is provided on the inner wall of a tubular porous support, a membrane structure is formed which can perfectly be used for pervaporation and pressure traction processes.

Hence, the invention relates in a first aspect to the use of a tubular membrane comprising a tubular porous support and a separating top layer from a ceramic oxide having an average pore diameter ranging between 0.1 and 10 nm on the inside of the support for separating liquid mixtures on the basis of pervaporation or pressure traction.

In a second aspect, the invention relates to a method for manufacturing a tubular pervaporation or pressure traction membrane having an average pore diameter ranging between 0.1 and 10 nm, comprising flowing a sol which comprises chain-shaped silicon compounds through a porous tubular support which support has pores of a diameter ranging between 1 nm and 10000 nm wherein, in the direction of the non-separating side, pore structures of increasingly large diameter are present under such conditions that from the sol, a layer of gel is formed on the inside of the support followed by calcining and sintering at a temperature ranging between 300 and 500°C for 1-10 hours.

In yet another respect the invention relates to a method for separating a liquid mixture through pervaporation or pressure traction utilising a membrane manufactured according to the method of the invention.

Membranes of the type porous support/separating top layer are already known for the use in gas separations. In this connection, reference is made to the article by De Lange et al. titled 'Formation and characterization of supported microporous ceramic membranes prepared by sol-gel modification techniques', in J. Membrane Sci. 99 (1995), 57-75. However, as indicated hereinabove, it is highly surprising that such membranes can also be used when they are in contact with liquid mixtures, because it was assumed that pervaporation and pressure traction membranes were only active if they exhibited interaction with the liquid mixture. However, ceramic separation layers are relatively inert; they do not swell and contain no selective channel structures like zeolites.

Because, surprisingly, an active interaction between separation layer and liquid mixture does not seem to be necessary in the use according to the invention, no conditioning time or acclimatizing step is necessary either, in contrast with the known (polymeric) pervaporation or pressure traction membranes. This advantage enables the use of the membranes according to the invention in processes wherein, in the mixtures to be separated, substantial variations occur in, for instance, chemical composition, polarity, pressure and/or temperature, or wherein highly different mixtures are used or processed, as in a so-called 'multipurpose plant'. The use is possible in batchwise and continuous processes.

Other important advantages of the membranes according to the invention over the known pervaporation and pressure traction membranes are that they are chemically resistant and relatively little sensitive to high temperatures up to 300°C and even higher.

Moreover, the ceramic membranes according to the invention have the advantage that an increase of the temperature and/or pressure involves an increase of the flux through the membranes, while the selectivity stays substantially the same.

Depending on the material and the structure of the separating top layer, the membranes according to the invention can be employed for different uses. For instance, the membranes according to the invention provide the possibility of selectively sequestering a component from a reaction mixture continuously and at relatively low operating costs, so that the equilibrium for a particular reaction shifts and processes take place more specifically and/or rapidly and higher conversions are eventually realized. In addition, the membrane can be used for purifying a particular liquid or for selectively recovering a valuable component. In particular, the membrane according to the invention is highly suitable for separating azeotropic mixtures.

The known membranes on the basis of a porous support and a ceramic separation layer that are used for gas separation are flat membranes. In accordance with the invention, tubular membranes are presently manufactured, which tubular membranes are provided, on the inside thereof, with a separating layer. This embodiment renders it simple to construct modular systems wherein the membrane surface is easy to scale up. In this manner, the modular size can readily be adapted to the desired processing capacity in an industrial process. Moreover, such a system gives hydrodynamic advantages. The mass transfer improves substantially, compared with flat structures. This means, inter alia, that when high-viscous liquids should be treated, it is still possible to work at a low water concentration. In tubular or pipe-shaped channels, a slighter film thickness can easily be created at a relatively slight energy input, so that the thickness of the boundary layer between membrane wall and liquids is reduced. Thus, the resistance to transportation from the mixture to be treated to the membrane decreases.

Consequently, the invention also relates to a tubular membrane comprising a tubular structure from a porous material, which structure comprises, on the inside thereof, a ceramic separation layer.

As stated, the membrane used according to the invention for pervaporation and/or pressure traction purposes comprises a porous support. In fact, this support can consist of any material that is inert to the liquids to be separated. Very suitable are supports from a metal oxide, such as aluminum oxide, zirconium oxide and silicon oxide, from metal, from carbon, and from combinations of these materials. It is essential that the porosity of the support be greater than that of the separating layer. Suitable results are obtained with porous materials having pores of a diameter ranging between 1 nm and 10000 nm. In order not to render the pressure drop over the complete membrane too great, the porous support material has, in the direction of the non-separating side, pore structures of increasingly large diameter. Such supports are already known and commercially available.

On the porous support, a microporous separating layer from a ceramic material is present. This layer has a thickness preferably ranging between 0.1 nm and 100 μm, more preferably between 1 nm and 5 μm, and is substantially responsible for the separating action of the membrane. The microporous layer has pores of an average diameter ranging between 0.1 and 10 nm, and preferably between 0.1 and 2 nm.

The separating layer can consist of different materials of a ceramic nature, but is preferably at least partly formed from a ceramic oxide. Suitable materials are silicon oxide, titanium oxide, zirconium oxide and aluminum oxide, and combinations of these oxides. In the preferred embodiment, the separating layer is formed from silicon oxide.

The membranes according to the invention can be manufactured in manners that are known for the manufacture of the inorganic membranes that can be used in the separation of gases. Such methods are mentioned in, inter alia, the above-mentioned article by De Lange et al.; in the article by Saracco et al. in J. Membrane Sci. 95 (1994) 105-123; in the article by Brinker et al. in J. Membrane Sci. 77 (1993) 165-179; and in the contribution by Keizer et al. in 'Ceramics Today - Tomorrow's Ceramics', P. Vincenzini (ed.), Elsevier Science Publishers B.V. (1991), 2511-2524.

In particular, the membranes used according to the invention for pervaporation and pressure traction are manufactured by providing a layer from a gel or sol of a suitable starting material, for instance a gel or sol on the basis of silicon, aluminum, zirconium and/or titanium compounds, on a porous support, and then calcining and sintering them to obtain a ceramic material. If necessary, this treatment can be repeated some times until the ceramic layer has acquired the desired thickness and/or a desired degree of porosity.

Although the ceramic separation layers are generally stable at high temperatures up to about 1000°C, the calcining and sintering steps must not be carried out at such a high temperature, because in that case, too coarse pores are formed. The same problem presents itself when the sintering time is too long.

For instance, silicon oxide is stable up to 900°C. However, when a silicon-containing gel is sintered at temperatures above 500°C and/or the sintering treatment is continued longer than 10 hours, pores are obtained that can be considerably larger than 5 nm. Separation layers having pores of such large dimensions are not, or at least less, suitable for pervaporation and pressure traction purposes. Titanium oxide is much less thermally stable than silicon oxide. It is stable only up to about 350°C. Therefore, a layer from this compound is manufactured by carrying out a sintering step at 300°C at a maximum.

Preferably, a sol of a silicon, aluminum, zirconium and/or titanium oxide is prepared by hydrolyzing a suitable organometallic compound. Next, from this sol, solvent is extracted through the porous support, as a result of which a gel layer is formed on the support.

In a particular embodiment, the invention relates to a method for manufacturing a tubular pervaporation or pressure traction membrane, comprising flowing a sol which comprises chain-shaped silicon compounds through a porous tubular support under such conditions that on the inside of the support, a gel layer is formed from the sol, followed by calcining and sintering at a temperature ranging between 300 and 500°C for 1-10 hours.

For a proper operation of the separating layer, it is desired that a silicon oxide layer be obtained having fewest possible pores greater than about 2 nm. Such a layer can be obtained by flowing the sol through the tubular porous support one or more times for 1-40 seconds, followed by calcining and sintering at 300-500°C, preferably at a temperature of 370-425°C, for 1-10 hours.

In a preferred embodiment of the method, as sol, a condensate of an acid-hydrolized organometallic compound is used, for instance and preferably tetraethyl orthosilicate in ethanol.

In more detail, in the last preferred embodiment, a separating layer from silicon oxide is provided on the inside of a tubular porous support, starting from a mixture of ethanol and tetraethyl orthosilicate. This mixture is hydrolized with nitric acid and water. Next, the reaction mixture is refluxed for about 3 hours, so that a condensate is formed. This condensate is dispersed into a sol in ethanol. When this sol is flown through the porous tubular support, ethanol is extracted, as a result of which the sol concentration increases and a gel is formed. Because of the use of the condensed, chain-shaped silicon structures, a thin top layer having small pores can be obtained. It is further noted that the use of other acid or base-hydrolized organometallic compounds proceeds in an analogous manner.

In comparison with the known membranes from organic polymers, the membranes according to the invention are chemically and thermally stable. Depending on the ceramic material and the desired pore structure, temperatures above 300°C can be used in the pervaporation or pressure traction processes.

In fact, the membrane according to the invention may and can be contacted with all liquid mixtures, and in particular with all conventional solvents, without the membrane being affected thereby. Possibly, only the sealing between the membrane and the membrane module may present problems. A sealing material that can suitably be used for most solvents at temperatures below 150°C is Viton®; at temperatures up to 300°C, Calrez® is a suitable sealing material. At working temperatures above 300°C, special compounds on the basis of ceramics, cermets or other metal-ceramic combinations or metal should be used.

More in particular, the membranes according to the invention are used for separating components from liquid mixtures. Particularly, all types of mixtures of liquids or organic solvents can be separated. Polar as well as nonpolar mixtures, and mixtures of polar and nonpolar liquids can be separated.

In a preferred embodiment, mixtures of organic solvents with water are separated from each other.

In particular, it has proved possible to dehydrate lower alcohols, such as methanol, ethanol and 2-propanol, utilizing the membranes according to the invention, while selectivities of 400, 200 and 600 respectively were found at water contents of 2 wt.% in the alcohol fraction. In this connection, the selectivity ($\alpha$) is defined as:

$$\alpha = (m_{water}/m_{alc})_{permeate}/ (m_{water}/m_{alc})_{feed},$$

$m_i$:mass percent component i.

The fluxes through the membrane were 50, 150 and 160 g/m$^2$/h respectively. At higher water contents in the feed, the selectivities decrease and the fluxes increase.

Accordingly, the overall performance of the membranes according to the invention is comparable with the commercially applied organic-polymer membranes. However, unlike the known membranes, the performance of the ceramic membranes remained substantially the same over a period of 3 months. Moreover, the performance was not appreciably affected by contacting the membrane according to the invention with different alcohol mixtures and mixtures having different water contents.

Methanol could be separated from methyltert.-butylether (MTBE) with a selectivity of about 19 and a flux of 41 g/m$^2$/h, 9 wt.% methanol in MTBE being present in the feed flow.

Presently, the invention will be specified with reference to the examples given below.

Example 1

A tubular asymmetrical Al$_2$O$_3$-membrane (T1-70), produced by the firm US-Filter, was provided with an SiO$_2$-top layer on the inside of the tube. For that purpose, a mixture of tetraethyl orthosilicate (TEOS) and ethanol was hydrolized with nitric acid (1M) and water (molar ratio TEOS/ethanol/nitric acid/water = 1/3.8/0.085/6.4). 0.1 mole TEOS (20.8 g) was started from. The mixture was refluxed at 80°C for 3 hours and then dispersed in 1 liter ethanol. Thus, a sol was obtained that was used for applying the top layer. The tubular support was twice coated by flowing through with the sol for 4 seconds. This involved the tubular support being clamped vertically. Next, the membranes were sintered at 400°C for 3 hours. The filters used had a pore diameter of 4 nm (40 Å) on the inside of the tube (lumen side). The pore diameter of the silica layer provided was between 0.1 and 0.5 nm (1 Å and 5 Å). The pore diameter was determined according to the modified Horváth-Kawatzoe model for nitrogen adsorption in cylindrical pores, as described in chapter IV of the ScD dissertation of R.S.A. de Lange (1993), University of Twente. The thickness of this layer varied between 50 nm and 100 nm.

To the selective silica side of this membrane, mixtures of water with different alcohols were presented: water/methanol, water/ethanol and water/isopropanol. At a feed composition of 2 mass% water and 98 mass% alcohol, high selectivities were found of 400, 200 and 600 respectively. Here, the selectivity ($\alpha$) is defined as:

$$\alpha = (m_{water}/m_{alc})_{permeate}/(m_{water}/m_{alc})_{feed},$$

$m_i$:mass percent component i.

The permeate fluxes measured were 50, 150 and 160 g/m$^2$ membrane/hour.

The addition of carboxylic acids such as oleic acid and erucic acid to the above mixtures resulted in higher permeate fluxes and selectivities. This increase proved to correspond to the composition of the mixture. At an equimolar alcohol/acid ratio, the final fluxes were 50-100% higher than those for alcohol-water mixtures. In the case of methanol, ethanol and isopropanol, these fluxes were 77, 155 and 260 g/m$^2$ membrane/hour, the associated selectivities being 490, 240 and 750.

An increase of the amount of water in the feed resulted in an increase of the permeate flux and a decrease in selectivity. For 5% water, a selectivity of 60, 100 and 500 was achieved in the case of methanol, ethanol and isopropanol respectively, the fluxes being 100, 200 and 210 g/m$^2$ membrane/hour. Higher concentrations of water in the feed resulted in still lower selectivities and higher permeate fluxes.

The membranes were used for 13 weeks for separating alcohol/water mixtures with different alcohols and different percentages of water (1-20 mass%). During these three months, no significant change was found in the membrane selectivity or size of the permeate flux.

Example 2. Dehydration of alcohols at high temperatures.

The membranes were included in a stainless-steel housing as described in De Lange et al., 'Preparation and characterization of microporous sol-gel derived membranes for gas separation applications' in 'Better ceramics through chemistry V', Hampden Smith M.J.; Klemperer, W.G.; Brinker, C.J., Materials Res. Soc. Pittsburg, U.S.A., Mat. Symp. Proc. 271 (1992), 505-510, after which a mixture of alcohol and water was presented. The temperatures and pressures used were chosen to be above ambient (at normal pressure (100 kPa), the boiling points of methanol, ethanol and isopropanol are 64, 72 and 78°C respectively). At an amount of water of 9 wt.% in methanol and at 81°C and 115 kPa excess pressure, a permeate flux of 660 g/m$^2$ hour was measured, while the selectivity was hardly affected ($\alpha$-20). At 100°C and 250 kPa excess pressure, the flux was 1050 g/m$^2$ hour, with the selectivity remaining the same. For water in ethanol (2 mass% water) at 100% and 180 kPa, a tripling in flux was measured, while here, too, the selectivity was hardly affected ($\alpha$-155). For water in isopropanol mixtures at 100°C with an increasing water content of from 2.8 to 7.7 mass%, the flux increased from 1252 g/m$^2$ hour to 2613 g/m$^2$ hour.

Example 3

The silica membranes described are used for separating methanol from a methanol/methyl tertiary butylether (MTBE). MTBE is used as lead substitute in petrol and MTBE is one of the fastest growing bulk chemicals of the last decade. MTBE is produced via a reaction of tertiary butylether with an excess measure of methanol. The mixture eventually produced is characterized by an azeotropic evaporation curve, which complicates the reprocessing with distillation. The removal of methanol is possible with a ceramic silica membrane. For this purpose, different mixtures of MTBE and methanol were presented as feed. At a mass% of between 6 and 17 methanol in MTBE, the flux of the membranes was between 10-50 g/m$^2$ membrane/hour. The membrane exhibits selectivity for methanol, the selectivity was 2-19, with a maximum 19 at 9 mass% methanol.

## Claims

1. Use of a tubular membrane comprising a tubular porous support and a separating top layer from a ceramic oxide having an average pore diameter ranging between 0.1 and 10 nm on the inside of the support for separating liquid mixtures on the basis of pervaporation or pressure traction.

2. A method for manufacturing a tubular pervaporation or pressure traction membrane having an average pore diameter ranging between 0.1 and 10 nm, comprising flowing a sol which comprises chain-shaped silicon compounds through a porous tubular support which support has pores of a diameter ranging between 1 nm and 10000 nm wherein, in the direction of the non-separating side, pore structures of increasingly large diameter are present under such conditions that from the sol, a layer of gel is formed on the inside of the support followed by calcining and sintering at a temperature ranging between 300 and 500°C for 1-10 hours.

3. Use according to claim 1 or method according to claim 2, wherein the separating layer has a thickness ranging between 0.1 nm and 100 $\mu$m and preferably between 1 nm and 5 $\mu$m.

4. Use according to claim 1 or 3 or method according to claim 2 or 3, wherein the separating layer has pores of an average diameter ranging between 0.1 and 2 nm.

5. Use according to claims 1, 3 or 4, wherein the separating layer is at least partly formed from silicon oxide , titanium oxide, zirconium oxide , aluminium oxide or combinations of said oxides.

6. Use according to claim 5, wherein the separating layer is formed from silicon dioxide.

7. Method according to 2-6, wherein as sol a condensate of acid hydrolysed tetraethyl orthosilicate in ethanol is used.

8. Method for separating a liquid mixture through pervaporation or pressure traction utilising a membrane manufactured according to the method of claims 2-7.

9. Method according to claim 8, wherein water is separated from an organic solvent; wherein organic solvents are separated or wherein methanol is removed from an MTBE-methanol mixture.

## Patentansprüche

1. Verwendung einer röhrenförmigen Membran mit einem röhrenförmigen porösen Träger und einer oberen Trennschicht aus einem keramischen Oxid mit einem mittleren Porendurchmesser im Bereich zwischen 0,1 und 10 nm auf der Innenseite des Trägers zum Trennen flüssiger Mischungen auf Grundlage von Pervaporation oder Drucktraktion.

2. Verfahren zur Herstellung einer röhrenförmigen Pervaporations- oder Drucktraktionsmembran mit einem mittleren Porendurchmesser im Bereich zwischen 0,1 und 10 nm, bei dem man ein Sol mit kettenförmigen Siliziumverbindungen durch einen porösen, röhrenförmigen Träger fließen läßt, der Poren eines Durchmessers im Bereich zwischen 1 nm und 10 000 nm hat, wobei in Richtung der nicht trennenden Seite Porenstrukturen mit zunehmend größeren Durchmessern unter solchen Bedingungen vorhanden sind, daß aus dem Sol eine Schicht Gel auf der Innenseite des Trägers gebildet wird, gefolgt von Calcinieren und Sintern bei einer Temperatur im Bereich von 300 bis 500°C für 1 - 10 Stunden.

3. Verwendung nach Anspruch 1 oder Verfahren nach Anspruch 2, wobei die Trennschicht eine Dicke im Bereich von 0,1 nm bis 100 µm und vorzugsweise zwischen 1 nm und 5 µm hat.

4. Verwendung nach Anspruch 1 oder 3 oder Verfahren nach Anspruch 2 oder 3, wobei die Trennschicht Poren eines mittleren Durchmessers im Bereich zwischen 0,1 und 2 nm hat.

5. Verwendung nach Ansprüchen 1, 3 oder 4, wobei die Trennschicht wenigstens teilweise aus Siliciumoxid, Titanoxid, Zirkoniumoxid, Aluminiumoxid oder Kombinationen dieser Oxide gebildet ist.

6. Verwendung nach Anspruch 5, wobei die Trennschicht aus Siliziumdioxid gebildet ist.

7. Verfahren nach Ansprüchen 2 bis 6, wobei als Sol ein Kondensat von säurehydrolisiertem Tetraethylorthosilikat in Ethanol verwendet wird.

8. Verfahren zum Trennen einer flüssigen Mischung durch Pervaporation oder Drucktraktion unter Verwendung einer Membran, die gemäß dem Verfahren der Ansprüche 2 bis 7 hergestellt ist.

9. Verfahren nach Anspruch 8, wobei Wasser von einem organischen Lösungsmittel abgetrennt wird, wobei organische Lösungsmittel abgetrennt werden oder wobei Methanol aus einem MTBE-Methanol Gemisch entfernt wird.

## Revendications

1. Utilisation d'une membrane tubulaire comprenant un support tubulaire poreux et une couche supérieure de séparation à partir d'un oxyde céramique présentant un diamètre moyen de pore compris entre 0,1 et 10 nm sur le côté interne du support afin de séparer des mélanges de liquide par pervaporation ou extraction en pression.

2. Procédé de fabrication d'une membrane tubulaire de pervaporation ou extraction en pression "preprésentant un diamètre moyen de pore compris entre 0,1 et 10 nm, comprenant la circulation d'un sol qui comprend des composés de silicium en forme de chaîne à travers un support tubulaire poreux, lequel support présente des pores d'un diamètre compris entre 1 nm et 10000 nm, dans lequel, dans le sens de la face de non séparation, des structures poreuses d'un large diamètre progressivement croissant sont présentes sous des conditions telles que, à partir du sol, une couche de gel est formée sur la face interne du support suivie par la calcination et le frittage à une température comprise entre 300 et 500°C pendant 1 à 10 heures.

3. Utilisation selon la revendication 1 ou procédé selon la revendication 2, dans lequel la couche de séparation présente une épaisseur comprise entre 0,1 nm et 100 µm et, de préférence, entre 1 nm et 5 µm.

4. Utilisation selon la revendication 1 ou 3, ou procédé selon la revendication 2 ou 3, dans lequel la couche de séparation présente des pores d'un diamètre moyen compris entre 0,1 et 2 nm.

5. Utilisation selon les revendications 1, 3 ou 4, dans laquelle la couche de séparation est au moins partiellement formée à partir d'oxyde de silicium, d'oxyde de titane, d'oxyde de zirconium, d'oxyde d'aluminium et de mélanges desdits oxydes.

6. Utilisation selon la revendication 5, dans laquelle la couche de séparation est formée à partir de dioxyde de silicium.

7. Procédé selon les revendications 2 à 6, dans lequel, en tant que sol, un condensât d'acide tétraéthyle orthosilicate hydrolysé dans de l'éthanol est utilisé.

8. Procédé de séparation d'un mélange liquide par pervaporation ou "extraction en pression" en utilisant une membrane fabriquée selon le procédé des revendications 2 à 7.

9. Procédé selon la revendication 8, dans lequel de l'eau est séparée d'un solvant organique dans lequel des solvants organiques sont séparés, ou dans lequel du méthanol est extrait d'un mélange MTBE (butyléther tertiaire méthanol/méthyle)-méthanol.